# EUROPEAN PATENT APPLICATION

(11) **EP 4 808 033 A1**
(43) Date of publication of application: **16.09.2026**
(21) Application number: 24896320.9
(22) Date of filing: 18.11.2024
(51) Int. Cl.: H04L 5/00

(54) **COMMUNICATION METHOD AND COMMUNICATION APPARATUS**

(30) Priority: 28.11.2023 CN 202311615508
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN)
(74) Representative: Körber, Martin Hans
(86) International application number: PCT/CN2024/132780
(87) International publication number: WO 2025/113229

(57) **Abstract**

This application provides a communication method and a communication apparatus. In the method, a BWP having a same link direction as a carrier is configured for a terminal device, and a plurality of BWPs are allowed to be activated simultaneously, so that frequency resource utilization efficiency can be improved, thereby increasing a data transmission rate of the terminal device, and improving uplink and downlink transmission performance of the terminal device.

## Description

### CROSS-REFERENCE TO RELATED APPLICATIONS

This application claims priority to Chinese Patent Application No. 202311615508.8, filed with the China National Intellectual Property Administration on November 28, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

To support terminal devices with different bandwidth capabilities, in consideration of factors such as energy saving of the terminal devices, a concept of a bandwidth part (bandwidth part, BWP) is introduced into new radio (new radio, NR). The BWP is a segment of contiguous resources in frequency domain, and includes an uplink BWP and a downlink BWP, which are respectively used for uplink transmission and downlink transmission.

It is currently defined in the NR protocol that uplink transmission is entirely performed in an uplink BWP, and downlink transmission is entirely performed in a downlink BWP. If the terminal device receives a plurality of BWP configurations, the terminal device can operate only on one of the BWPs at a time, and the BWP is referred to as an active BWP.

In the foregoing BWP configuration manner, a maximum transmission rate of the terminal device is limited, resulting in poor uplink and downlink transmission performance of the terminal device.

### SUMMARY

Embodiments of this application provide a communication method and a communication apparatus, to improve uplink and downlink transmission performance of a terminal device.

According to a first aspect, an embodiment of this application provides a communication method. The method may be performed by a network device or a module (for example, a chip) in a network device. The method includes: sending first configuration information to a terminal device, where the first configuration information is used to configure a first carrier and a second carrier for the terminal device; and sending second configuration information to the terminal device, where the second configuration information is used to configure X BWPs for the terminal device, and X is an integer greater than 1, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

In the foregoing solution, a BWP having a same link direction as a carrier is configured for the terminal device, and a plurality of BWPs are allowed to be activated simultaneously, so that frequency resource utilization efficiency can be improved, thereby increasing a data transmission rate of the terminal device, and improving uplink and downlink transmission performance of the terminal device.

In a possible implementation method, a part of the N BWPs is located on the first carrier, and the other part is located on the second carrier.

In the foregoing solution, the terminal device is enabled to flexibly use two non-contiguous frequency sub-bands of one frequency band to perform transmission in a same link direction. Especially, when the first frequency band is an FDD frequency band, the terminal device is enabled to use two frequency sub-bands in different link directions to simultaneously perform transmission in a same link direction.

In a possible implementation method, an identifier of each of the X BWPs includes a first part and a second part, first parts of identifiers of the X BWPs are the same, and second parts of the identifiers of the X BWPs are different from each other.

In the foregoing solution, the identifiers of the X configured BWPs each include the first part and the second part, and the first parts of the identifiers of the X BWPs are the same, so that the X BWPs can be associated. In this way, there is no need to associate the X BWPs through additional signaling, thereby reducing signaling overheads.

In a possible implementation method, the method further includes: sending downlink control information (downlink control information, DCI) to the terminal device, where the DCI is used to activate the N BWPs.

In the foregoing solution, the N BWPs are activated by using the DCI, so that the BWPs can be dynamically activated, thereby improving flexibility of the solution.

In a possible implementation method, a BWP indicator field in the DCI includes a first field and a second field, the first field indicates first parts of identifiers of the N BWPs, and the second field indicates second parts of the identifiers of the N BWPs.

Because the identifiers of the N BWPs include a same first part, the first field only needs to indicate one first part. The different identifiers of the BWPs include different second parts. Therefore, the second field needs to indicate a second part of an identifier of each of the N BWP identifiers.

In a possible implementation method, the second field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the second field includes the second parts of the identifiers of the N BWPs.

In a possible implementation method, the DCI includes a first BWP indicator field and a second BWP indicator field, the first BWP indicator field indicates first parts of identifiers of the N BWPs, and the second BWP indicator field indicates second parts of the identifiers of the N BWPs.

Because the identifiers of the N BWPs include a same first part, the first BWP indicator field only needs to indicate one first part. The different identifiers of the BWPs include different second parts. Therefore, the second BWP indicator field needs to indicate a second part of an identifier of each of the N BWP identifiers.

In a possible implementation method, the second BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In the foregoing solution, the BWP is activated by associating the X bits with the X BWPs, so that a small quantity of bits can be used to indicate the active BWP, thereby reducing signaling overheads.

In a possible implementation method, the second BWP indicator field includes the second parts of the identifiers of the N BWPs.

In the foregoing solution, the identifier of the BWP is carried to indicate the active BWP, so that when X is relatively large and N is relatively small, a small quantity of bits can be used to indicate the active BWP, thereby reducing signaling overheads.

In a possible implementation method, the method further includes: sending first signaling and DCI to the terminal device, where the first signaling indicates first parts of identifiers of the N BWPs in the X BPWs, the DCI indicates second parts of the identifiers of the N BWPs, and the first signaling is radio resource control (radio resource control, RRC) signaling, a system information block (system information block, SIB), a master information block (master information block, MIB), or a medium access control control element (medium access control control element, MAC CE).

In a possible implementation method, each of the X BWPs has a dedicated identifier.

In a possible implementation method, the method further includes: sending DCI to the terminal device, where the DCI is used to activate the N BWPs.

In the foregoing solution, the N BWPs are activated by using the DCI, so that the BWPs can be dynamically activated, thereby improving flexibility of the solution.

In a possible implementation method, the DCI includes N BWP indicator fields, and each of the N BWP indicator fields indicates an identifier of one of the N BWPs.

In a possible implementation method, the DCI includes a BWP indicator field, the BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In the foregoing solution, the BWP is activated by associating the X bits with the X BWPs, so that a small quantity of bits can be used to indicate the active BWP, thereby reducing signaling overheads.

In a possible implementation method, the DCI includes a BWP indicator field, and the BWP indicator field includes identifiers of the N BWPs.

In the foregoing solution, the identifier of the BWP is carried to indicate the active BWP, so that when X is relatively large and N is relatively small, a small quantity of bits can be used to indicate the active BWP, thereby reducing signaling overheads.

According to a second aspect, an embodiment of this application provides a communication method. The method may be performed by a terminal device or a module (for example, a chip) in the terminal device. The method includes: receiving first configuration information from a network device, where the first configuration information is used to configure a first carrier and a second carrier for the terminal device; and receiving second configuration information from the network device, where the second configuration information is used to configure X BWPs for the terminal device, and X is an integer greater than 1, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

In the foregoing solution, a BWP having a same link direction as a carrier is configured for the terminal device, and a plurality of BWPs are allowed to be activated simultaneously, so that frequency resource utilization efficiency can be improved, thereby increasing a data transmission rate of the terminal device, and improving uplink and downlink transmission performance of the terminal device.

In a possible implementation method, a part of the plurality of BWPs is located on the first carrier, and the other part is located on the second carrier.

In the foregoing solution, a frequency domain position of the BWP can be flexibly configured.

In a possible implementation method, an identifier of each of the X BWPs includes a first part and a second part, first parts of identifiers of the X BWPs are the same, and second parts of the identifiers of the X BWPs are different from each other.

In a possible implementation method, the method further includes: receiving DCI from the network device, where the DCI is used to activate the N BWPs.

In the foregoing solution, the N BWPs are activated by using the DCI, so that the BWPs can be dynamically activated, thereby improving flexibility of the solution.

In a possible implementation method, a BWP indicator field in the DCI includes a first field and a second field, the first field indicates first parts of identifiers of the N BWPs, and the second field indicates second parts of the identifiers of the N BWPs.

Because the identifiers of the N BWPs include a same first part, the first field only needs to indicate one first part. The different identifiers of the BWPs include different second parts. Therefore, the second field needs to indicate a second part of an identifier of each of the N BWP identifiers.

In a possible implementation method, the second field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In the foregoing solution, the BWP is activated by associating the X bits with the X BWPs, so that a small quantity of bits can be used to indicate the active BWP, thereby reducing signaling overheads.

In a possible implementation method, the second field includes the second parts of the identifiers of the N BWPs.

In the foregoing solution, the identifier of the BWP is carried to indicate the active BWP, so that when X is relatively large and N is relatively small, a small quantity of bits can be used to indicate the active BWP, thereby reducing signaling overheads.

In a possible implementation method, the DCI includes a first BWP indicator field and a second BWP indicator field, the first BWP indicator field indicates first parts of identifiers of the N BWPs, and the second BWP indicator field indicates second parts of the identifiers of the N BWPs.

Because the identifiers of the N BWPs include a same first part, the first BWP indicator field only needs to indicate one first part. The different identifiers of the BWPs include different second parts. Therefore, the second BWP indicator field needs to indicate a second part of an identifier of each of the N BWP identifiers.

In a possible implementation method, the second BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In the foregoing solution, the BWP is activated by associating the X bits with the X BWPs, so that a small quantity of bits can be used to indicate the active BWP, thereby reducing signaling overheads.

In a possible implementation method, the second BWP indicator field includes the second parts of the identifiers of the N BWPs.

In the foregoing solution, the identifier of the BWP is carried to indicate the active BWP, so that when X is relatively large and N is relatively small, a small quantity of bits can be used to indicate the active BWP, thereby reducing signaling overheads.

In a possible implementation method, the method further includes: receiving first signaling and DCI from the network device, where the first signaling indicates first parts of identifiers of the N BWPs in the X BPWs, the DCI indicates second parts of the identifiers of the N BWPs, and the first signaling is RRC signaling, a SIB, a MIB, or a MAC CE.

In a possible implementation method, each of the X BWPs has a dedicated identifier.

In a possible implementation method, the method further includes: receiving DCI from the network device, where the DCI is used to activate the N BWPs.

In the foregoing solution, the N BWPs are activated by using the DCI, so that the BWPs can be dynamically activated, thereby improving flexibility of the solution.

In a possible implementation method, the DCI includes N BWP indicator fields, and each of the N BWP indicator fields indicates an identifier of one of the N BWPs.

In a possible implementation method, the DCI includes a BWP indicator field, the BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In the foregoing solution, the BWP is activated by associating the X bits with the X BWPs, so that a small quantity of bits can be used to indicate the active BWP, thereby reducing signaling overheads.

In a possible implementation method, the DCI includes a BWP indicator field, and the BWP indicator field includes identifiers of the N BWPs.

In the foregoing solution, the identifier of the BWP is carried to indicate the active BWP, so that when X is relatively large and N is relatively small, a small quantity of bits can be used to indicate the active BWP, thereby reducing signaling overheads.

Based on any implementation method of the first aspect or the second aspect:

In a possible implementation method, a part or all of the following parameters of the X BWPs are the same: frequency resource parameters of the BWPs, channel parameters, or signal parameters.

In the foregoing solution, because the part or all of the parameters configured for the X BWPs are the same, the following beneficial effects are achieved: 1. Signaling overheads can be reduced during parameter configuration. 2. Memory specification and implementation complexity of the terminal device can be reduced. 3. When the X BWPs are switched between each other, a switching delay can be reduced because there is the same parameter.

In a possible implementation method, a channel includes one or more of the following: a physical downlink shared channel (physical downlink shared channel, PDSCH), a physical downlink control channel (physical downlink control channel, PDCCH), a physical uplink shared channel (physical uplink shared channel, PUSCH), a physical random access channel (physical random access channel, PRACH), or a physical uplink control channel (physical uplink control channel, PUCCH); and a signal includes one or more of the following: a demodulation reference signal (demodulation reference signal, DMRS) of the PDSCH, a DMRS of the PDCCH, a DMRS of the PUSCH, a DMRS of the PUCCH, a phase tracking reference signal (phase tracking reference signal, PTRS) of the PDSCH, a PTRS of the PUSCH, a channel state information-reference signal (channel state information-reference signal, CSI-RS), a tracking reference signal (tracking reference signal, TRS), a sounding reference signal (sounding reference signal, SRS), or synchronization signal block (synchronization signal block, SSB).

In a possible implementation method, a switching delay between the X BWPs is less than a first threshold, where when a subcarrier spacing is 15 kilohertz, the first threshold is equal to duration of one slot or duration of three slots; when a subcarrier spacing is 30 kilohertz, the first threshold is equal to duration of two slots or duration of five slots; when a subcarrier spacing is 60 kilohertz, the first threshold is equal to duration of three slots or duration of nine slots; or when a subcarrier spacing is 120 kilohertz, the first threshold is equal to duration of six slots or duration of 18 slots.

In the foregoing solution, when the X BWPs are switched between each other, the switching delay is less than a switching delay between BWPs in an existing protocol, that is, the switching delay can be reduced.

According to a third aspect, an embodiment of this application provides a communication method. The method may be performed by a network device or a module (for example, a chip) in a network device. The method includes: sending first configuration information to a terminal device, where the first configuration information is used to configure a first carrier and a second carrier for the terminal device; and sending second configuration information to the terminal device, where the second configuration information is used to configure X BWPs for the terminal device, and X is a positive integer, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs include a first BWP, a frequency resource of the first BWP is contiguous and overlaps both the first carrier and the second carrier, N BWPs in the X BWPs are simultaneously activated, and N is an integer greater than 1.

In the foregoing solution, a BWP having a same link direction as a carrier is configured for the terminal device, and a plurality of BWPs are allowed to be activated simultaneously, so that frequency resource utilization efficiency can be improved, thereby increasing a data transmission rate of the terminal device, and improving uplink and downlink transmission performance of the terminal device.

According to a fourth aspect, an embodiment of this application provides a communication method. The method may be performed by a terminal device or a module (for example, a chip) in the terminal device. The method includes: receiving first configuration information from a network device, where the first configuration information is used to configure a first carrier and a second carrier for the terminal device; and receiving second configuration information from the network device, where the second configuration information is used to configure X BWPs for the terminal device, and X is a positive integer, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs include a first BWP, a frequency resource of the first BWP is contiguous and overlaps both the first carrier and the second carrier, N BWPs in the X BWPs are simultaneously activated, and N is an integer greater than 1.

In the foregoing solution, a BWP having a same link direction as a carrier is configured for the terminal device, and a plurality of BWPs are allowed to be activated simultaneously, so that frequency resource utilization efficiency can be improved, thereby increasing a data transmission rate of the terminal device, and improving uplink and downlink transmission performance of the terminal device.

Based on the third aspect or the fourth aspect:

In a possible implementation method, a frequency domain start position of the first BWP is located on one of the first carrier and the second carrier that has a lower frequency position.

In a possible implementation method, the second configuration information includes indication information, and the indication information indicates a carrier on which a frequency domain start position of the first BWP is located.

In the foregoing solution, the indication information explicitly indicates the carrier on which the frequency domain start position of the first BWP is located, so that indication accuracy can be improved.

In a possible implementation method, the second configuration information includes an intra-carrier offset of the first BWP and a bandwidth size of the first BWP.

In the foregoing solution, the intra-carrier offset of the first BWP and the bandwidth size of the first BWP are explicitly carried in the second configuration information, so that configuration accuracy can be improved.

In a possible implementation method, the second configuration information includes a resource indicator value (resource indicator value, RIV) and a first parameter value, the RIV and the first parameter are used to determine an intra-carrier offset of the first BWP and a bandwidth size of the first BWP, and the first parameter is not less than a size of a frequency resource range occupied by the first carrier and the second carrier.

In the foregoing solution, configuration parameters (namely, the RIV and the first parameter) that can be used to determine the intra-carrier offset of the first BWP and the bandwidth size of the first BWP are carried in the second configuration information. Because the RIV and the first parameter occupy a small quantity of bits, signaling overheads can be reduced.

In a possible implementation method, only a valid resource in the first BWP is available for data transmission, the valid resource in the first BWP is an overlapping part between the frequency resource of the first BWP and a frequency resource of the first carrier and/or a frequency resource of the second carrier, and the valid resource in the first BWP includes a first valid resource on the first carrier and/or a second valid resource on the second carrier.

In a possible implementation method, physical resource blocks (physical resource block, PRB) in the first BWP are consecutively numbered; or PRBs in the valid resource in the first BWP are consecutively numbered.

In a possible implementation method, a size of a resource block group (resource block group, RBG) is determined based on a quantity of PRBs included in the valid resource in the first BWP

In a possible implementation method, for a PDSCH transmission or a PUSCH transmission, a first precoding codebook is used in the first valid resource and a second precoding codebook is used in the second valid resource.

In a possible implementation method, in the first valid resource, a first resource is used for downlink measurement and/or a second resource is used for measurement reporting, and in the second valid resource, a third resource is used for downlink measurement and/or a fourth resource is used for measurement reporting, where the first resource is different from the third resource.

In the foregoing solution, downlink measurement and measurement reporting are independently performed in different valid resources, so that flexibility and accuracy of measurement and reporting can be improved.

In a possible implementation method, in the first valid resource, a fifth resource is used for uplink measurement, and in the second valid resource, a sixth resource is used for uplink measurement, where the fifth resource is different from the sixth resource.

In the foregoing solution, uplink measurement is independently performed in different valid resources, so that flexibility and accuracy of measurement can be improved.

According to a fifth aspect, an embodiment of this application provides a communication apparatus. The apparatus may be a network device, or may be a module (for example, a chip) in the network device. The apparatus has a function of implementing any implementation method in the first aspect or the third aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a terminal device or a module (for example, a chip) in the terminal device. The apparatus has a function of implementing any implementation method in the second aspect or the fourth aspect. The function may be implemented by hardware, or may be implemented by hardware executing corresponding software. The hardware or the software includes one or more modules corresponding to the function.

According to a seventh aspect, an embodiment of this application provides a communication apparatus, including units or means configured to perform steps of any implementation method in the first aspect to the fourth aspect.

According to an eighth aspect, an embodiment of this application provides a communication apparatus, including a processor and an interface circuit. The processor is configured to communicate with another apparatus through the interface circuit, and perform any implementation method in the first aspect to the fourth aspect. There are one or more processors.

Optionally, the communication apparatus may further include a memory configured to store computer instructions. The memory is coupled to the processor, and the processor executes the computer instructions stored in the memory, to cause the apparatus to perform any implementation method in the first aspect to the fourth aspect.

According to a ninth aspect, an embodiment of this application further provides a computer program product. The computer program product includes a computer program or instructions. When the computer program or the instructions are run by a communication apparatus, any implementation method in the first aspect to the fourth aspect is performed.

According to a tenth aspect, an embodiment of this application further provides a computer-readable storage medium. The computer-readable storage medium stores instructions, and when the instructions are run on a communication apparatus, any implementation method in the first aspect to the fourth aspect is performed.

According to an eleventh aspect, an embodiment of this application further provides a chip system, including a processor, configured to perform any implementation method in the first aspect to the fourth aspect.

### BRIEF DESCRIPTION OF DRAWINGS

FIG. 1a is a diagram of an architecture of a communication system to which an embodiment of this application is applied;
FIG. 1b is a diagram of a network device;
FIG. 2 is an example diagram of TDD;
FIG. 3 is an example diagram of full-duplex TDD;
FIG. 4 is an example diagram of half-duplex TDD;
FIG. 5 is an example diagram of an FDD spectrum reconstruction solution;
FIG. 6 is another example diagram of an FDD spectrum reconstruction solution;
FIG. 7 is a diagram of uplink and downlink BWP configurations of an FDD frequency;
FIG. 8 is a diagram of uplink and downlink BWP configurations of a TDD frequency;
FIG. 9 is an example diagram of configuring a BWP on an FDD spectrum;
FIG. 10 is a schematic flowchart of a communication method according to an embodiment of this application;
FIG. 11 is an example diagram of a BWP configuration according to an embodiment of this application;
FIG. 12 is an example diagram of a BWP configuration according to an embodiment of this application;
FIG. 13 shows an example of a first BWP;
FIG. 14 shows an example of a first BWP;
FIG. 15 shows an example of a first BWP;
FIG. 16 shows an example of a first valid resource and a second valid resource;
FIG. 17 is a diagram of a structure of a communication apparatus according to an embodiment of this application; and
FIG. 18 is a diagram of a structure of a communication apparatus according to an embodiment of this application.

### DESCRIPTION OF EMBODIMENTS

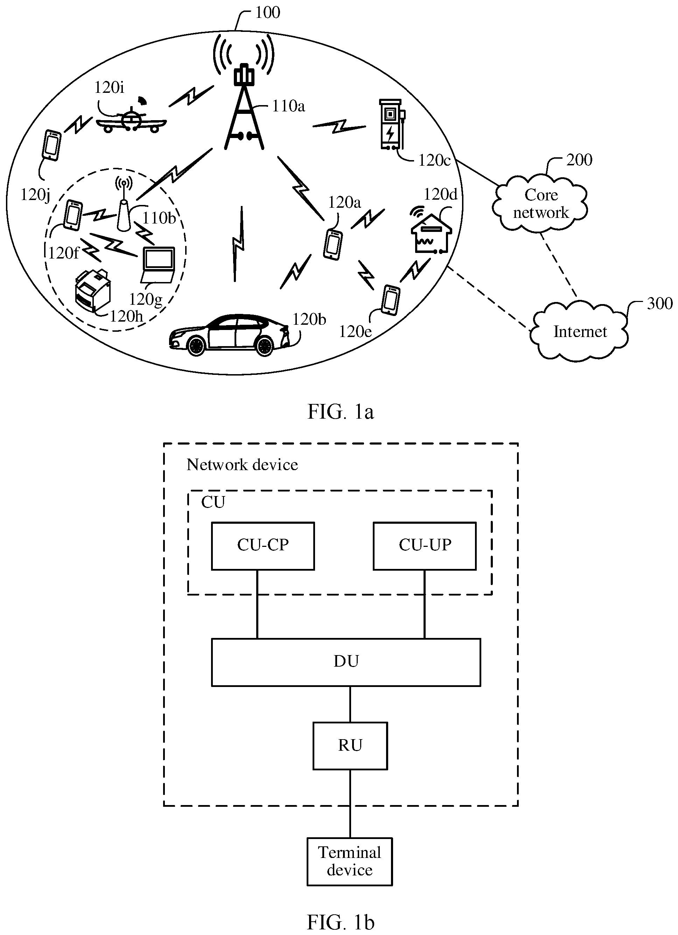

FIG. 1a is a diagram of an architecture of a communication system to which an embodiment of this application is applied. The communication system shown in FIG. 1a includes a radio access network 100 and a core network 200. Optionally, the communication system further includes an internet 300. The radio access network 100 may include at least one network device (for example, 110a and 110b in FIG. 1a), and may further include at least one terminal device (for example, 120a to 120j in FIG. 1a). The terminal device is connected to the network device in a wireless manner, and the network device is connected to the core network in a wireless or wired manner. The core network device and the network device may be different physical devices that are independent of each other; functions of the core network device and logical functions of the network device may be integrated into a same physical device; or some functions of the core network device and some functions of the network device may be integrated into one physical device. Mutual connections between terminal devices and between network devices may be implemented in a wired or wireless manner. FIG. 1a is merely a diagram. The communication system may further include other network devices, for example, may further include a wireless relay device and a wireless backhaul device, which are not shown in FIG. 1a.

The network device is an access device through which the terminal device accesses the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), a distributed unit (distributed unit, DU), or radio unit (radio unit, RU). The network device may be a macro base station (for example, 110a in FIG. 1a), a micro base station or an indoor base station (for example, 110b in FIG. 1a), or a relay node, a donor node, or the like. A specific technology used by the network device and a specific device form of the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and a smart city. The terminal device may be specifically a mobile phone, a tablet computer, a computer having a wireless transceiver function, a wearable device, a vehicle, an airplane, a ship, a robot, a robotic arm, a smart home device, or the like. A specific technology used by the terminal device and a specific device form of the terminal device are not limited in embodiments of this application.

The network device and the terminal device may be fixed at a position, or may be movable. The network device and the terminal device may be deployed on the land, including an indoor or outdoor device, a handheld device, or a vehicle-mounted device; may be deployed on a water surface; or may be deployed on a plane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1a may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 1a may be referred to as communication apparatuses having functions of the network device, and 120a to 120j in FIG. 1a may be referred to as communication apparatuses having functions of the terminal device.

Communication between the network device and the terminal device, between network devices, or between terminal devices may be performed by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the application scenarios such as smart grid, industrial control, intelligent transportation, and smart city. The function of the terminal device may alternatively be performed by a module (for example, a chip) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. The terminal device needs to establish a wireless connection to a cell controlled by the network device, to communicate with the network device. The cell establishing the wireless connection to the terminal device is referred to as a serving cell of the terminal device.

FIG. 1b is a diagram of a network device. As shown in FIG. 1b, the network device includes one or more CUs, one or more DUs, and one or more RUs. For clarity, FIG. 1b shows only one CU, one DU, and one RU. The CU is configured to be connected to a core network and one or more DUs. Optionally, the CU may have a part of functions of the core network. The CU may include a CU-control plane (control plane, CP) and a CU-user plane (user plane, UP).

The CU and the DU may be configured based on functions of protocol layers of a wireless network that are implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer), and the DU is configured to implement functions of a protocol layer below the PDCP layer (for example, a radio link control (radio link control, RLC) layer, a medium access control (medium access control, MAC) layer, and/or a physical (physical, PHY) layer). For another example, the CU is alternatively configured to implement functions of the protocol layer above the PDCP layer (for example, the RRC layer and/or the SDAP layer), and the DU is configured to implement functions of the PDCP layer and the protocol layer below the PDCP layer (for example, the RLC layer, the MAC layer, and/or the PHY layer).

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of a protocol layer above the RLC layer are set on the CU, and remaining functions of the RLC layer and functions of a protocol layer below the RLC layer are set on the DU. For another example, functions of the CU or the DU may be divided based on a service type or another system requirement, for example, based on a delay. A function whose processing time needs to satisfy a low delay requirement is set on the DU, and a function whose processing time does not need to satisfy the delay requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate frequency/radio frequency function. For another example, the DU is configured to implement a higher layer function of the PHY layer, and the RU is configured to implement a lower layer function of the PHY layer or the lower layer function and a radio frequency function. The higher layer function of the physical layer may include a part of functions of the physical layer, and the part of functions are closer to the MAC layer. The lower layer function of the physical layer may include another part of functions of the physical layer, and the part of functions are closer to an intermediate frequency/radio frequency side.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of the software module and the hardware module.

For ease of understanding the present invention, the following describes the background of the present invention.

### 1. Time division duplex (time division duplex, TDD) and frequency division duplex (frequency division duplex, FDD)

Currently, new radio (new radio, NR) supports TDD and FDD based on separation of uplink transmission and downlink transmission in terms of time and/or a frequency.

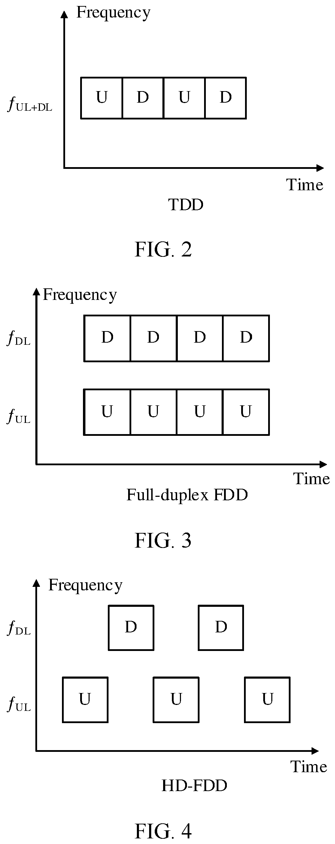

TDD means that uplink transmission and downlink transmission use a same frequency but are separated in terms of time. A spectrum that supports a TDD operation may also be referred to as a TDD spectrum. For a carrier, the TDD spectrum has only one contiguous bandwidth for uplink transmission and downlink transmission, and therefore is sometimes referred to as an unpaired spectrum (unpaired spectrum). FIG. 2 is an example diagram of TDD. In FIG. 3, "U" represents uplink transmission, "D" represents downlink transmission, and "f_{UL+DL}" represents a frequency used for uplink transmission and downlink transmission.

FDD supports uplink transmission and downlink transmission using different frequencies. Depending on whether uplink transmission and downlink transmission are performed simultaneously, FDD can further include full-duplex FDD and half-duplex (half-duplex) FDD. A spectrum that supports an FDD operation may also be referred to as an FDD spectrum. For a carrier, the FDD spectrum has a pair of non-contiguous bandwidths for uplink transmission and downlink transmission respectively, and therefore is sometimes referred to as a paired spectrum (paired spectrum). FIG. 3 is an example diagram of full-duplex TDD. FIG. 4 is an example diagram of half-duplex TDD. In FIG. 3 and FIG. 4, "U" represents uplink transmission, "D" represents downlink transmission, "f_{UL}" represents a frequency used for uplink transmission, and "f_{DL}" represents a frequency used for downlink transmission.

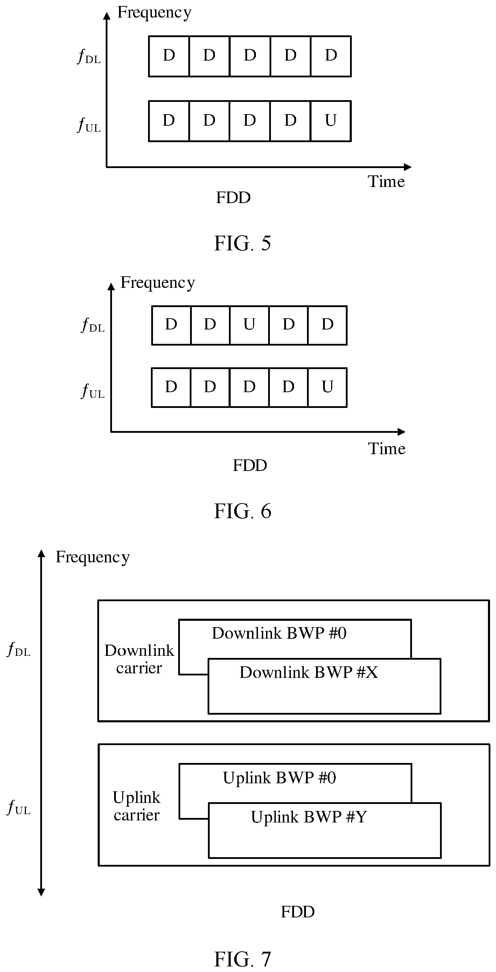

An existing FDD spectrum mainly has the following problems. (1) In the FDD spectrum, an uplink bandwidth and a downlink bandwidth are fixedly symmetrically allocated. However, in an existing wide area network, a downlink service is mainly used, an uplink service is underutilized, and uplink spectrum utilization is low, resulting in low overall spectral efficiency and low downlink throughput. (2) In the existing FDD spectrum, uplink transmission and downlink transmission are performed on different frequencies. As a result, uplink and downlink channel reciprocity is low, channel information acquisition in an FDD system is difficult, and spectral efficiency improvement is limited. Based on the foregoing reasons, the FDD spectrum may be used in some new manners in a future evolution process, including performing downlink transmission in an uplink spectrum, performing uplink sending in a downlink spectrum, or the like. FIG. 5 is an example diagram of an FDD spectrum reconstruction solution. It can be learned that the uplink spectrum may be used for downlink transmission. FIG. 6 is another example diagram of an FDD spectrum reconstruction solution. It can be learned that the downlink spectrum may be used for uplink transmission, and the uplink spectrum may be used for downlink transmission. Meanings of "U", "D", "f_{UL}", and "f_{DL}" in FIG. 5 and FIG. 6 are the same as those in FIG. 3. In this manner, not only can more resources be provided for downlink transmission, but also uplink and downlink channel reciprocity can be enhanced, thereby improving transmission performance.

### 2. Bandwidth part (bandwidth part, BWP)

To support terminal devices with different bandwidth capabilities and considering reasons such as energy saving of the terminal devices, a concept of a BWP is introduced into NR. The BWP is a segment of contiguous resources in frequency domain, and includes an uplink BWP and a downlink BWP, which are respectively used for uplink transmission and downlink transmission.

In an initial access phase, the network device configures an initial uplink BWP and an initial downlink BWP for the terminal device. After a radio resource control (radio resource control, RRC) connected mode is entered, the network device configures one or more dedicated uplink BWPs and downlink BWPs for the terminal device. It is currently defined in the NR protocol that uplink transmission is entirely performed in an uplink BWP, and downlink transmission is entirely performed in a downlink BWP. If the terminal device receives a plurality of BWP configurations, the terminal device can operate only on one of the BWPs at a time, and the BWP is referred to as an active BWP. Because the terminal device transmits data based on the BWP, most parameters for data transmission of the terminal device are configured based on the BWP, for example, a physical layer parameter and a higher layer parameter.

It is specified in an existing protocol that the BWP can be configured only in a corresponding carrier bandwidth. To be specific, the uplink BWP is configured in an uplink carrier bandwidth, and the downlink BWP is configured in a downlink carrier bandwidth. Therefore, for the FDD system, the uplink BWP can be configured only in the uplink spectrum, and the downlink BWP can be configured only in the downlink spectrum. FIG. 7 is a diagram of uplink and downlink BWP configurations of an FDD frequency. It can be learned that a downlink BWP #0 and a downlink BWP #X are configured on the downlink carrier, and an uplink BWP #0 and an uplink BWP #Y are configured on the uplink carrier.

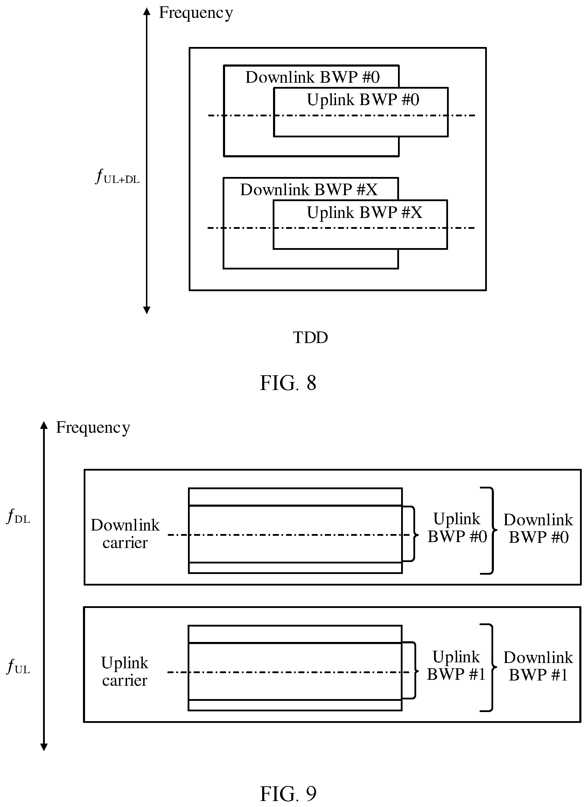

In addition, for a TDD system, it is further specified in the protocol that the uplink BWP and the downlink BWP are paired, and center frequencies of a pair of uplink BWP and downlink BWP need to be consistent, while bandwidth sizes are not limited. FIG. 8 is a diagram of uplink and downlink BWP configurations of an TDD frequency. It can be learned that an uplink BWP #0 and a downlink BWP #0 are a pair of BWPs, and center frequencies are consistent. An uplink BWP #X and a downlink BWP #X are a pair of BWPs, and center frequencies are consistent.

To support a new use manner of the FDD spectrum, to be specific, to support uplink transmission in the downlink spectrum, and/or support downlink transmission in the uplink spectrum, how the network device configures a BWP for uplink and downlink transmission for the terminal device needs to be resolved.

In a possible implementation solution, both an FDD uplink carrier and an FDD downlink carrier are processed as a TDD carrier. To be specific, a downlink BWP and an uplink BWP are configured in both the FDD uplink carrier and the FDD downlink carrier, and center frequencies of the uplink BWP and the downlink BWP are consistent. FIG. 9 is an example diagram of configuring a BWP on an FDD spectrum. In this example, one downlink BWP and one uplink BWP are configured in each carrier. Refer to FIG. 9. An uplink BWP #0 and a downlink BWP #0 are configured on a downlink carrier, and center frequencies of the uplink BWP #0 and the downlink BWP #0 are consistent. An uplink BWP #1 and a downlink BWP #1 are configured on an uplink carrier, and center frequencies of the uplink BWP #1 and the downlink BWP #1 are consistent.

However, the foregoing use manner may have the following problems.

Problem 1: It is specified in a current protocol that only one BWP can be activated at a time for one terminal device in a same link direction. Therefore, in the foregoing BWP configuration manner, the terminal device can use only one BWP of the uplink carrier or the downlink carrier to transmit data at a time. Consequently, the terminal device can use only a resource of one carrier to perform transmission in a same link direction, and a maximum transmission rate of the terminal device is limited.

Problem 2: It is specified in an existing protocol that when an active BWP is switched, a large switching delay exists, and the terminal device cannot perform any uplink or downlink data transmission in the switching delay. Specifically, a value of an existing BWP switching delay is shown in Table 1.

**Table 1**

| µ | NR slot length (unit: millisecond) | BWP switching delay (unit: slot slot) | |
|---|---|---|---|
| | | Type 1 | Type 2 |
| 0 | 1 | 1 | 3 |
| 1 | 0.5 | 2 | 5 |
| 2 | 0.25 | 3 | 9 |
| 3 | 0.125 | 6 | 18 |

It can be learned that the existing BWP switching delay is at least one slot or even longer. In the foregoing BWP configuration manner of the FDD spectrum, if an active BWP of the terminal device is switched from a BWP on one carrier to a BWP on another carrier, a delay is large and data interruption occurs. Therefore, the terminal device cannot quickly perform switching between the two carriers to obtain a larger frequency diversity gain and implement fast interference avoidance. This is not conducive to fast load balancing between the two carriers.

To resolve the foregoing problem, this application provides corresponding embodiments. The following provides detailed descriptions.

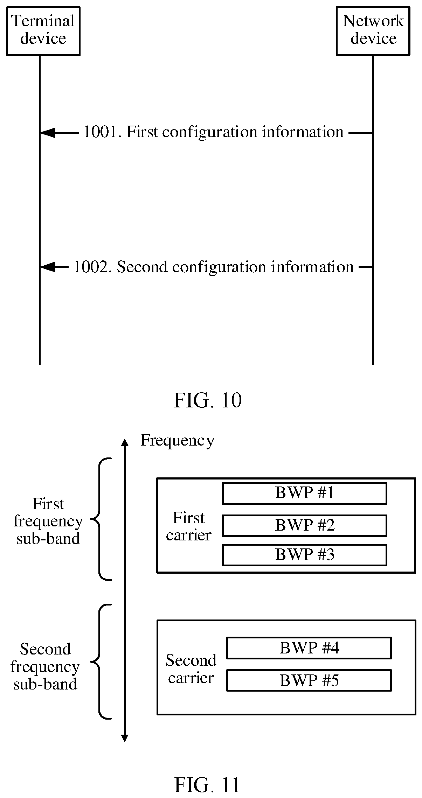

FIG. 10 is a schematic flowchart of a communication method according to an embodiment of this application. The method is performed by a network device or a module (for example, a chip) in the network device, and a terminal device or a module (for example, a chip) in the terminal device. The following uses an example in which the method is performed by the network device and the terminal device for description.

The method includes the following steps.

Step 1001. The network device sends first configuration information to the terminal device. Correspondingly, the terminal device receives the first configuration information.

The first configuration information is used to configure a first carrier and a second carrier for a terminal device. The first carrier and the second carrier have a same link direction, for example, both are uplink carriers or both are downlink carriers. The link direction refers to a data or signaling transmission direction, including an uplink direction and a downlink direction.

For example, the first carrier and the second carrier belong to a same cell.

In an implementation method, the first carrier is located on a first frequency sub-band of a first frequency band, the second carrier is located on a second frequency sub-band of the first frequency band, the first frequency sub-band and the second frequency sub-band are non-contiguous.

In another implementation method, the first carrier is located on an uplink frequency band of the first frequency band, and the second carrier is located on a downlink frequency band of the first frequency band; or the first carrier is located on the downlink frequency band of the first frequency band, and the second carrier is located on the uplink frequency band of the first frequency band. The uplink frequency band and the downlink frequency band are non-contiguous.

In another implementation method, the first carrier is located on an uplink frequency band of an FDD frequency band, and the first carrier is located on a downlink frequency band of the FDD frequency band; or the first carrier is located on the downlink frequency band of the FDD frequency band, and the first carrier is located on the uplink frequency band of the FDD frequency band. The uplink frequency band and the downlink frequency band are non-contiguous.

For example, the first carrier and the second carrier are two frequency parts of a same carrier, or may be two carriers independent of each other.

For example, the first configuration information may be carried in radio resource control (radio resource control, RRC) signaling, a system information block (system information block, SIB), a master information block (master information block, MIB), downlink control information (downlink control information, DCI), or a medium access control control element (medium access control control element, MAC CE).

For example, the first configuration information is used to configure a frequency start position (for example, a relative position or an absolute position) and a bandwidth size of the first carrier, and is used to configure a frequency start position (for example, a relative position or an absolute position) and a bandwidth size of the second carrier.

In an implementation method, if the bandwidth size of the first carrier is the same as that of the second carrier, the first configuration information may include the frequency start position of the first carrier, the frequency start position of the second carrier, and a bandwidth size, where the bandwidth size is applicable to the first carrier and the second carrier. In this method, only one bandwidth size needs to be carried in the first configuration information, and two bandwidth sizes do not need to be carried, thereby reducing signaling overheads.

In another implementation method, if the bandwidth size of the first carrier is different from that of the second carrier, the first configuration information includes the frequency start position and the bandwidth size of the first carrier, and includes the frequency start position and the bandwidth size of the second carrier. In the method, the bandwidth size of the first carrier and the bandwidth size of the second carrier are separately configured, so that the bandwidth size can be flexibly configured based on a service requirement, thereby improving configuration flexibility.

In embodiments of this application, a subcarrier spacing (subcarrier spacing, SCS) of the first carrier may be the same as that of the second carrier, thereby reducing processing complexity of the network device and the terminal device. Alternatively, the subcarrier spacing of the first carrier may be different from that of the second carrier, so that different types of service requirements can be supported.

Step 1002. The network device sends second configuration information to the terminal device. Correspondingly, the terminal device receives the second configuration information.

The second configuration information is used to configure X BWPs for the terminal device, where X is an integer greater than 1, or X is a positive integer. X is a maximum quantity of BWPs that can be used and that are configured by the network device for the terminal device. To be specific, the terminal device may use one or more of the X BWPs to transmit data or signaling.

The network device may activate one of the X BWPs, or simultaneously activate N of the X BWPs, where N is an integer greater than 1.

In an implementation method, link directions of the X BWPs and the two carriers are the same.

In an implementation method, frequency resources of at least two of the X BWPs do not overlap with each other.

A sequence of step 1001 and step 1002 is not limited. Step 1001 may be performed before step 1002, or step 1002 may be performed before step 1001, or step 1001 and step 1002 are performed at the same time.

In the foregoing solution, the X BWPs having the same link direction as the first carrier and the second carrier are configured for the terminal device, where X is an integer greater than 1, and a plurality of BWPs are allowed to be activated simultaneously, so that frequency resource utilization efficiency can be improved, thereby increasing a data transmission rate of the terminal device, and improving uplink and downlink transmission performance of the terminal device.

The following provides two different implementation methods for relationships between the X BWPs and the first carrier and the second carrier, and configuration manners of the X BWPs.

Implementation method 1: X is an integer greater than 1, the X BWPs have the same link direction as the first carrier and the second carrier, M BWPs in the X BWPs are located on the first carrier, other X-M BWPs in the X BWPs are located on the second carrier, one or N of the X BWPs are simultaneously activated, M is a positive integer, X-M is a positive integer, and N is an integer greater than 1.

Based on the implementation method 1, the network device configures the X BWPs for the terminal device, where X is greater than or equal to 2, a part of the X BWPs is located on the first carrier, and the other BWPs are located on the second carrier. One or more of the X BWPs may be simultaneously activated.

If the link direction of the first carrier and the second carrier is an uplink direction, the link direction of the X BWPs is also an uplink direction. If the link direction of the first carrier and the second carrier is a downlink direction, the link direction of the X BWPs is also a downlink direction.

FIG. 11 is an example diagram of a BWP configuration according to an embodiment of this application. In this example, the network device configures five BWPs for the terminal device. A BWP #1, a BWP #2, and a BWP #3 are located on the first carrier, and a BWP #4 and a BWP #5 are located on the second carrier.

For example, it is assumed that the N BWPs in the X BWPs are simultaneously activated, where N is an integer greater than 1. All the N active BWPs may be located on the first carrier. For example, the N carriers include the BWP #1 and the BWP #2 in FIG. 11. Alternatively, all the N BWPs are located on the second carrier. For example, the N carriers include the BWP #4 and the BWP #5 in FIG. 11. Alternatively, a part of carriers in the N BWPs is located on the first carrier, and the other carriers are located on the second carrier. For example, the N carriers include the BWP #2, the BWP #3, and the BWP #4 in FIG. 11.

For the BWP in the implementation method 1, the following describes two methods for identifying the BWP. For details, refer to the following BWP identification method 1 and BWP identification method 2.

BWP identification method 1: An identifier of each of the X BWPs includes two parts, which are referred to as a first part and a second part. The first part and the second part jointly and uniquely indicate one BWP, first parts of identifiers of the X BWPs are the same, and second parts of the identifiers of the X BWPs are different from each other.

Based on the BWP identification method, the identifiers of the X configured BWPs each include the first part and the second part, and the first parts of the identifiers of the X BWPs are the same, so that the X BWPs can be associated. In this way, there is no need to associate the X BWPs through additional signaling, thereby reducing signaling overheads.

The first part of the identifier of the BWP may also be referred to as a parent identifier of the X BWPs, and the second part of the identifier of the BWP may also be referred to as a sub-identifier of the X BWPs.

For example, the network device may activate one or N of the X BWPs by using signaling such as RRC signaling, a MAC CE, or DCI, or by using a predefined rule, where N is an integer greater than 1.

As an example, the following describes three different activation manners: an activation manner a, an activation manner b, and an activation manner c respectively.

Activation manner a: The network device sends DCI to the terminal device, the DCI is used to activate one or N BWPs, the DCI includes a BWP indicator field, the BWP indicator field includes a first field and a second field, the first field indicates first parts of the identifiers of the X BWPs, and the second field indicates second parts of the identifiers of the one or N BWPs.

In this solution, the one or N BWPs are activated by using the DCI, so that the BWP can be dynamically activated, thereby improving flexibility of the solution.

The BWP indicator field may reuse a BWP indicator field specified in an existing protocol.

For example, the first field of the BWP indicator field includes A bits, and the A bits are used to indicate the common first parts of the X BWPs. The second field of the BWP indicator field includes B bits, and the B bits are used to indicate the second parts of the identifiers of the one or N BWPs. For example, if three BWPs are simultaneously indicated for activating, the first A bits of the BWP indicator field indicate common first parts of identifiers of the three BWPs, and the last B bits of the BWP indicator field indicate respective second parts of the identifiers of the three BWPs.

The following describes two different implementation methods in which the second field of the BWP indicator field indicates the second parts of the identifiers of the one or N BWPs.

Method (1): The second field includes X bits (that is, B=X), the X bits are in one-to-one correspondence with the X BWPs, values of one or N bits in the X bits are a first value, the first value indicates to activate a corresponding BWP, values of the remaining X-1 or X-N bits in the X bits are a second value, and the second value indicates not to activate a corresponding BWP. Alternatively, it may be understood that each of the X bits indicates the second part of the identifier of the BWP that needs to be activated.

In this solution, the BWP is activated by associating the X bits with the X BWPs, so that a small quantity of bits can be used to indicate the active BWP, thereby reducing signaling overheads.

For example, X is equal to 5. It is assumed that the five configured BWPs are a BWP #1, a BWP #2, a BWP #3, a BWP #4, and a BWP #5. In this case, the second field includes five bits, and a value of each bit is 0 or 1. For example, if the value is 0, it indicates that the corresponding BWP is not activated; if the value is 1, it indicates that the corresponding BWP is activated. If the five bits sequentially correspond to the BWP #1, the BWP #2, the BWP #3, the BWP #4, and the BWP #5 from a most significant bit to a least significant bit, and the BWP #1 and the BWP #2 need to be activated, values of the five bits are 11000.

The X bits are used as a whole, and may also be referred to as a bitmap.

Manner (2): The second field includes the second parts of the identifiers of the one or N BWPs that need to be activated. In other words, the second field explicitly includes the second part of the identifier of the BWP that needs to be activated.

For example, if a maximum quantity of BWPs that are allowed to be activated is C, where C is less than or equal to X, C is greater than or equal to N, and the second part of the identifier of each BWP occupies D bits, the second field may include C*D bits, and every D bits may indicate the second part of the identifier of the BWP that needs to be activated.

For example, X=10, C=8, and the second part of the identifier of each BWP occupies 3 bits. In this case, the second field occupies 8*3=24 bits. If the quantity of BWPs that need to be activated currently is 5, 5*3=15 bits in the second field are used to represent the second parts of the identifiers of the five BWPs that need to be activated, and other nine bits may be set to a preset value, indicating that the nine bits are not used to represent second parts of identifiers of any BWPs.

Activation manner b: The network device sends DCI to the terminal device, the DCI is used to activate one or N BWPs, the DCI includes a first BWP indicator field and a second BWP indicator field, the first BWP indicator field indicates the first parts of the identifiers of the X BWPs, and the second BWP indicator field indicates the second parts of the identifiers of the one or N BWPs.

The first BWP indicator field may reuse a BWP indicator field specified in an existing protocol, and the second BWP indicator field may be a newly added BWP indicator field.

For example, if three BWPs are simultaneously activated, the first BWP indicator field indicates common first parts of identifiers of the three BWPs, and the second BWP indicator field indicates respective second parts of the identifiers of the three BWPs.

The following describes two different implementation methods in which the second BWP indicator field indicates the second parts of the identifiers of the one or N BWPs.

Method (1): The second BWP indicator field includes X bits, the X bits are in one-to-one correspondence with the X BWPs, values of one or N bits in the X bits are a first value, the first value indicates to activate a corresponding BWP, values of the remaining X-1 or X-N bits in the X bits are a second value, and the second value indicates not to activate a corresponding BWP. Alternatively, it may be understood that each of the X bits indicates the second part of the identifier of the BWP that needs to be activated.

For example, X is equal to 5. It is assumed that the five configured BWPs are a BWP #1, a BWP #2, a BWP #3, a BWP #4, and a BWP #5. In this case, the second field includes five bits, and a value of each bit is 0 or 1. For example, if the value is 0, it indicates that the corresponding BWP is not activated; if the value is 1, it indicates that the corresponding BWP is activated. If the five bits sequentially correspond to the BWP #1, the BWP #2, the BWP #3, the BWP #4, and the BWP #5 from a most significant bit to a least significant bit, and the BWP #1 and the BWP #2 need to be activated, values of the five bits are 11000.

The X bits are used as a whole, and may also be referred to as a bitmap.

Manner (2): The second BWP indicator field includes the second parts of the identifiers of the one or N BWPs that need to be activated. In other words, the second BWP indicator field explicitly includes the second part of the identifier of the BWP that needs to be activated.

For example, if a maximum quantity of BWPs that are allowed to be activated is C, where C is less than or equal to X, C is greater than or equal to N, and the second part of the identifier of each BWP occupies D bits, the second BWP indicator field may include C*D bits, and every D bits may indicate the second part of the identifier of the BWP that needs to be activated.

For example, X=10, C=8, and the second part of the identifier of each BWP occupies 3 bits. In this case, the second BWP indicator field occupies 8*3=24 bits. If the quantity of BWPs that need to be activated currently is 5, 5*3=15 bits in the second BWP indicator field are used to represent the second parts of the identifiers of the five BWPs that need to be activated, and other nine bits may be set to a preset value, indicating that the nine bits are not used to represent second parts of identifiers of any BWPs.

Activation manner c: The network device sends first signaling and DCI to the terminal device, the first signaling indicates the first parts of the identifiers of the one or N of the X BWPs, the DCI indicates the second parts of the identifiers of the one or N BWPs, and the first signaling is RRC signaling, a SIB, a MIB, or a MAC CE.

In other words, in this manner, the first signaling indicates the common first parts of the identifiers of the one or N active BWPs, and the DCI indicates the respective second parts of the identifiers of the one or N active BWPs.

In an implementation method, a BWP indicator field in the DCI may be used to indicate the respective second parts of the identifiers of the one or N active BWPs. The BWP indicator field may reuse a BWP indicator field in an existing protocol, or may be a newly added BWP indicator field.

BWP identification method 2: Each of the X BWPs has a dedicated identifier. In other words, each BWP has one identifier, and identifiers of different BWPs are different from each other.

For example, the network device may send the DCI to the terminal device, and the DCI is used to activate the one or N of the X BWPs. The following describes three different implementation methods, which are respectively activation manner 1, activation manner 2, and activation manner 3.

Activation manner 1: The DCI includes one or N BWP indicator fields, and each BWP indicator field indicates an identifier of one BWP.

For example, if a maximum quantity of BWPs that are allowed to be activated is C, where C is less than or equal to X, and C is greater than or equal to N, the DCI may include C BWP indicator fields. For example, if one BWP needs to be activated currently, a corresponding BWP indicator field in the DCI may indicate an identifier of the BWP to be activated, and the other C-1 BWP indicator fields are not used to indicate identifiers of any BWPs. For another example, if three BWPs need to be activated currently, three corresponding BWP indicator fields in the DCI may be used to respectively indicate identifiers of the three BWPs to be activated, each of the three BWP indicator fields indicates an identifier of one BWP to be activated, and the other C-3 BWP indicator fields are not used to indicate identifiers of any BWPs.

Activation manner 2: The DCI includes a BWP indicator field, the BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

For example, X is equal to 5. It is assumed that the five configured BWPs are a BWP #1, a BWP #2, a BWP #3, a BWP #4, and a BWP #5. In this case, the BWP indicator field includes five bits, and a value of each bit is 0 or 1. For example, if the value is 0, it indicates that the corresponding BWP is not activated; if the value is 1, it indicates that the corresponding BWP is activated. If the five bits sequentially correspond to the BWP #1, the BWP #2, the BWP #3, the BWP #4, and the BWP #5 from a most significant bit to a least significant bit, and the BWP #1 and the BWP #2 need to be activated, values of the five bits are 11000.

The X bits are used as a whole, and may also be referred to as a bitmap.

The BWP indicator field may reuse a BWP indicator field in an existing protocol.

Activation manner 3: The DCI includes a BWP indicator field, and the BWP indicator field includes the identifiers of the one or N BWPs that need to be activated. In other words, the BWP indicator field explicitly includes the identifier of the BWP that needs to be activated.

For example, if a maximum quantity of BWPs that are allowed to be activated is C, where C is less than or equal to X, C is greater than or equal to N, and the identifier of each BWP occupies D bits, the BWP indicator field may include C*D bits, and every D bits may be used to indicate the identifier of one BWP that needs to be activated.

For example, X=10, C=8, and the identifier of each BWP occupies 3 bits. In this case, the BWP indicator field occupies 8*3=24 bits. If the quantity of BWPs that need to be activated currently is 5, 5*3=15 bits in the BWP indicator field are used to represent the identifiers of the five BWPs that need to be activated, and other nine bits may be set to a preset value, indicating that the nine bits are not used to represent identifiers of any BWPs.

The foregoing describes the two different BWP identification methods, and provides a plurality of different specific implementations for each identification method.

In an implementation method, the X BWPs in the foregoing implementation method 1 may further satisfy the following feature 1 and/or feature 2.

Feature 1: A part or all of the following parameters of the X BWPs are the same: frequency resource parameters of the BWPs, channel parameters, or signal parameters. In other words, the X BWPs may share a parameter, or it is understood as that a part of or all of the parameters configured for the X BWPs are the same.

For example, a channel herein may include one or more of the following: a PDSCH, a PDCCH, a PUSCH, a PRACH, or a PUCCH.

For example, a signal herein may include one or more of the following: a DMRS of the PDSCH, a DMRS of the PDCCH, a DMRS of the PUSCH, a DMRS of the PUCCH, a PTRS of the PDSCH, a PTRS of the PUSCH, a CSI-RS, a TRS, an SRS, or an SSB.

Because the part or all of the parameters configured for the X BWPs are the same, the following beneficial effects are achieved: 1. Signaling overheads can be reduced during parameter configuration. 2. Memory specification and implementation complexity of the terminal device can be reduced. 3. When the X BWPs are switched between each other, a switching delay can be reduced because there is the same parameter.

Feature 2: A switching delay between the X BWPs is less than a first threshold.

Refer to Table 1. When a value of µ is 0, the subcarrier spacing is 15 kilohertz, and the first threshold is equal to duration of one slot (for the type 1) or duration of three slots (for the type 2). When a value of µ is 1, the subcarrier spacing is 30 kilohertz, and the first threshold is equal to duration of two slots (for the type 1) or duration of five slots (for the type 2). When a value of µ is 2, the subcarrier spacing is 60 kilohertz, and the first threshold is equal to duration of three slots (for the type 1) or duration of nine slots (for the type 2). When a value of µ is 3, the subcarrier spacing is 120 kilohertz, and the first threshold is equal to duration of six slots (for the type 1) or duration of 18 slots (for the type 2).

Therefore, in embodiments of this application, when the X BWPs satisfy the feature 2, when the X BWPs are switched between each other, the switching delay is less than a switching delay between BWPs in an existing protocol, that is, the switching delay can be reduced.

To satisfy the foregoing feature 2, a possible implementation method is: enhancing a capability of the terminal device, so that the terminal device can reduce the switching delay between the BWPs.

When the X BWPs configured for the terminal device satisfy the feature 1 and/or the feature 2, the switching delay between the X BWPs can be reduced. For example, a reduced switching delay may be symbol-level (symbol-level), for example, one symbol or two symbols, or even the switching delay may be reduced to zero. However, a BWP switching delay in an existing protocol shown in Table 1 is slot-level (slot-level).

With reference to the foregoing two BWP identification methods, for the foregoing BWP identification method 1, that is, the identifier of each BWP includes the first part and the second part. If two BWPs include a same first part, a switching delay between the two BWPs may be reduced according to the foregoing delay reduction method. If the two BWPs include different first parts, a maximum value of the switching delay between the two BWPs may be defined based on an existing protocol shown in Table 1. For example, the network device configures a BWP #1 to a BWP #10 for the terminal device in the manner of the embodiment in FIG. 10, where link directions of the 10 BWPs are uplink directions, the BWP #1 to the BWP #10 form a group of BWPs, and identifiers of the BWP #1 to the BWP #10 include a same first part and different second parts; and configures a BWP #11 to a BWP #20 for the terminal device in the manner of the embodiment in FIG. 10, where link directions of the 10 BWPs may be all uplink directions or all downlink directions, the BWP #11 to the BWP #20 form a group of BWPs, and identifiers of the BWP #11 to the BWP #20 include a same first parts and different second parts. The first parts included in the identifiers of the BWP #1 to the BWP #10 are different from the first parts included in the identifiers of the BWP #11 to the BWP #20. A switching delay between any two of the BWP #1 to the BWP #10 may be reduced according to the foregoing delay reduction method, and a switching delay between any two of the BWP #11 to the BWP #20 may also be reduced according to the foregoing delay reduction method. However, if any one of the BWP #1 to the BWP #10 is switched to any one of the BWP #11 to the BWP #20, or if any one of the BWP #11 to the BWP #20 is switched to any one of the BWP #1 to the BWP #10, a maximum value of a switching delay of the BWP may be defined based on an existing protocol shown in Table 1. That is, a switching delay between different BWPs in a same group of BWPs is less than a switching delay between different BWPs in different groups of BWPs.

For the foregoing BWP identification method 2, that is, the identifier of each BWP is the dedicated identifier, the network device may associate, by using the signaling, a plurality of BWPs configured for the terminal device, and a switching delay between the plurality of associated BWPs may be reduced according to the foregoing delay reduction method. For example, the network device configures a BWP #1 to a BWP #10 for the terminal device in the manner of the embodiment in FIG. 10, where link directions of the 10 BWPs are uplink directions, the BWP #1 to the BWP #10 form a group of BWPs, and identifiers of the BWP #1 to the BWP #10 are different from each other; and configures a BWP #11 to a BWP #20 for the terminal device in the manner of the embodiment in FIG. 10, where link directions of the 10 BWPs may be all uplink directions or all downlink directions, the BWP #11 to the BWP #20 form a group of BWPs, identifiers of the BWP #11 to the BWP #20 are different from each other, and an identifier of any one of the BWP #1 to the BWP #10 is different from an identifier of any one of the BWP #11 to the BWP #20. The network device indicates, to the terminal device, that the BWP #1 to the BWP #10 are associated with each other, and indicates that the BWP #11 to the BWP #20 are associated with each other. In this case, a switching delay between any two of the BWP #1 to the BWP #10 may be reduced according to the foregoing delay reduction method, and a switching delay between any two of the BWP #11 to the BWP #20 may also be reduced according to the foregoing delay reduction method. However, if any one of the BWP #1 to the BWP #10 is switched to any one of the BWP #11 to the BWP #20, or if any one of the BWP #11 to the BWP #20 is switched to any one of the BWP #1 to the BWP #10, a maximum value of a switching delay of the BWP may be defined based on an existing protocol shown in Table 1. That is, a switching delay between different BWPs in a same group of BWPs is less than a switching delay between different BWPs in different groups of BWPs.

Implementation method 2: In another embodiment, relationships between the X BWPs and the first carrier and the second carrier satisfy: X is a positive integer, the X BWPs have the same link direction as the first carrier and the second carrier, the X BWPs include a first BWP, a frequency resource of the first BWP is contiguous, the frequency resource of the first BWP overlaps both the first carrier and the second carrier, one or N of the X BWPs are simultaneously activated, and N is an integer greater than 1.

Based on the implementation method 2, the network device configures the X BWPs for the terminal device, where X is greater than or equal to 1, and one or more of the X BWPs may be simultaneously activated. The X BWPs include at least the first BWP, and the first BWP may intersect a frequency resource of the first carrier and a frequency resource of the second carrier. In other words, the frequency resource of the first BWP overlaps both the frequency resource of the first carrier and the frequency resource of the second carrier.

A main difference between the implementation method 2 and the foregoing implementation method 1 is: The BWP configured in the implementation method 2 may intersect the first carrier and the second carrier, that is, one BWP overlaps both the two carriers, while the BWP in the foregoing implementation method 1 is inside the first carrier or the second carrier, and therefore does not overlap both the two carriers. In the implementation method 2, a BWP configuration manner is relatively limited, and BWP configuration flexibility is improved.

If X is an integer greater than 1, any BWP in the X BWPs other than the first BWP may be similar to the first BWP, and can intersect the first carrier and the second carrier, or may be located inside the first carrier or the second carrier. In other words, in the method, it is required that at least one BWP (for example, the first BWP) can intersect the first carrier and the second carrier, and a configuration for another BWP is not limited, the another BWP may be inside the first carrier or the second carrier, or may intersect both the first carrier and the second carrier.

If the link direction of the first carrier and the second carrier is an uplink direction, the link direction of the X BWPs is also an uplink direction. If the link direction of the first carrier and the second carrier is a downlink direction, the link direction of the X BWPs is also a downlink direction.

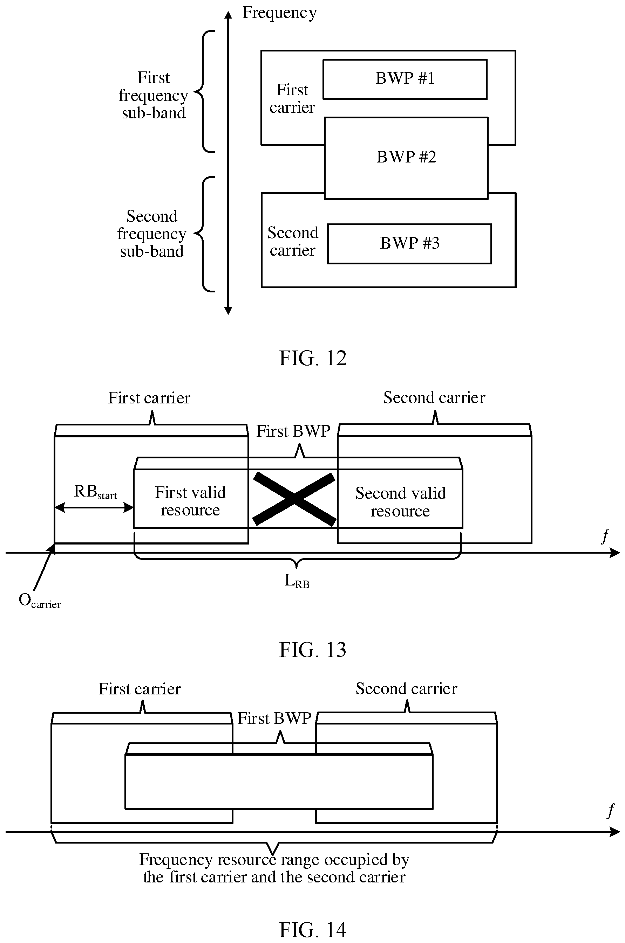

FIG. 12 is an example diagram of a BWP configuration according to an embodiment of this application. In this example, the network device configures three BWPs for the terminal device, where a BWP #1 is located on the first carrier, a BWP #3 is located on the second carrier, and a frequency resource of a BWP #2 overlaps both the frequency resource of the first carrier and the frequency resource of the second carrier.

For the first BWP (for example, the BWP #2 in FIG. 12), only a valid resource in the first BWP is available for data transmission, the valid resource in the first BWP is an overlapping part between the frequency resource of the first BWP and the frequency resource of the first carrier and/or the frequency resource of the second carrier, and the valid resource in the first BWP includes a first valid resource on the first carrier and/or a second valid resource on the second carrier.

Based on the implementation method 2, in an implementation method, the second configuration information includes *RB*ₛₜₐᵣₜ and *L*_{RB}. *RB*ₛₜₐᵣₜ represents an intra-carrier offset of the first BWP, that is, an offset of a frequency domain start position of the first BWP relative to a frequency domain start position of a reference carrier (or referred to as an associated carrier), and the reference carrier is the first carrier or the second carrier. *L*_{RB} indicates a bandwidth size of the first BWP, for example, may be specifically a quantity of PRBs occupied by the first BWP. In this solution, the intra-carrier offset of the first BWP and the bandwidth size of the first BWP are explicitly carried in the second configuration information, so that configuration accuracy can be improved.

FIG. 13 shows an example of a first BWP. For example, ${N}_{BWP}^{start}$ is used to represent the frequency domain start position of the first BWP, and *O*_{carrier} is used to represent the frequency domain start position of the reference carrier of the first BWP. Therefore, ${N}_{BWP}^{start} = {O}_{carrier} + {RB}_{start}$ . *O*_{carrier} may be configured by the network device by using signaling. In the example in FIG. 13, the reference carrier of the first BWP is the first carrier.

In an implementation method, in a protocol definition or pre-configuration manner, the reference carrier of the first BWP may be considered by default as one of the first carrier and the second carrier that has a lower frequency position, that is, the frequency domain start position of the first BWP is located on one of the first carrier and the second carrier that has the lower frequency position.

In another implementation method, the second configuration information in step 1002 includes indication information, and the indication information indicates a carrier on which a frequency domain start position of the first BWP is located. In other words, the second configuration information explicitly indicates that the reference carrier of the first BWP is the first carrier or the second carrier.

The following describes two different implementation methods in which the network device configures the intra-carrier offset (namely, *RB*ₛₜₐᵣₜ) of the first BWP and the bandwidth size (namely, *L*_{RB}) of the first BWP for the terminal device.

Configuration method 1: The second configuration information in step 1002 includes the intra-carrier offset of the first BWP and the bandwidth size of the first BWP.

Based on the configuration method 1, the intra-carrier offset of the first BWP and the bandwidth size of the first BWP are explicitly carried in the second configuration information.

Configuration method 2: The second configuration information in step 1002 includes a resource indicator value (resource indicator value, RIV) and a first parameter value, the RIV and the first parameter are used to determine an intra-carrier offset of the first BWP and a bandwidth size of the first BWP, and the first parameter is not less than a size of a frequency resource range occupied by the first carrier and the second carrier.

In this solution, because the RIV and the first parameter occupy a small quantity of bits, signaling overheads can be reduced.

FIG. 14 shows an example of a first BWP. The size of the frequency resource range occupied by the first carrier and the second carrier is a contiguous frequency domain resource starting from the frequency domain start position of the first carrier to a frequency domain end position of the second carrier, or is a contiguous frequency domain resource starting from the frequency domain start position of the second carrier to a frequency domain end position of the first carrier.

Based on the configuration method 2, the intra-carrier offset of the first BWP and the bandwidth size of the first BWP are not explicitly carried in the second configuration information, but the RIV and the first parameter are carried. Then, the terminal device may derive the intra-carrier offset of the first BWP and the bandwidth size of the first BWP based on the RIV and the first parameter.

For example, *RB*ₛₜₐᵣₜ, *L*_{RB}, the first parameter (represented by ${N}_{BWP}^{size}$), and the RIV satisfy the following relationship.$If \left({L}_{RB}-1\right) \leq \left⌊{N}_{BWP}^{size}/2\right⌋ , RIV = {N}_{BWP}^{size} \left({L}_{RB}-1\right) + {RB}_{start} .$ $If \left({L}_{RB}-1\right) > \left⌊{N}_{BWP}^{size}/2\right⌋ , RIV = {N}_{BWP}^{size} \left({N}_{BWP}^{size}-{L}_{RB}-1\right) + \left(\begin{matrix}{N}_{BWP}^{size} - 1 - \\ {RB}_{start}\end{matrix}\right) .$$1 \leq {L}_{RB} \leq \left({N}_{BWP}^{size}-{RB}_{start}\right) ,$ and ${N}_{BWP}^{size}$ is an integer greater than 275. In principle, a value of ${N}_{BWP}^{size}$ is not less than the size of the frequency resource range occupied by the first carrier and the second carrier.

The following describes two different implementations of a physical resource block (physical resource block, PRB) index of the valid resource in the first BWP, which are respectively the following method A and method B. The first BWP includes one or more PRBs.

Method A: The PRBs in the first BWP are consecutively numbered.

All the PRBs in the first BWP are numbered in ascending order. For example, if the first BWP includes p+1 PRBs, indexes of the PRBs in the first BWP range from 0 to p.

Indexes of PRBs included in the first valid resource are consecutive, indexes of PRBs included in the second valid resource are consecutive, but the indexes of the PRBs of the first valid resource and the indexes of the PRBs of the second valid resource are non-contiguous.

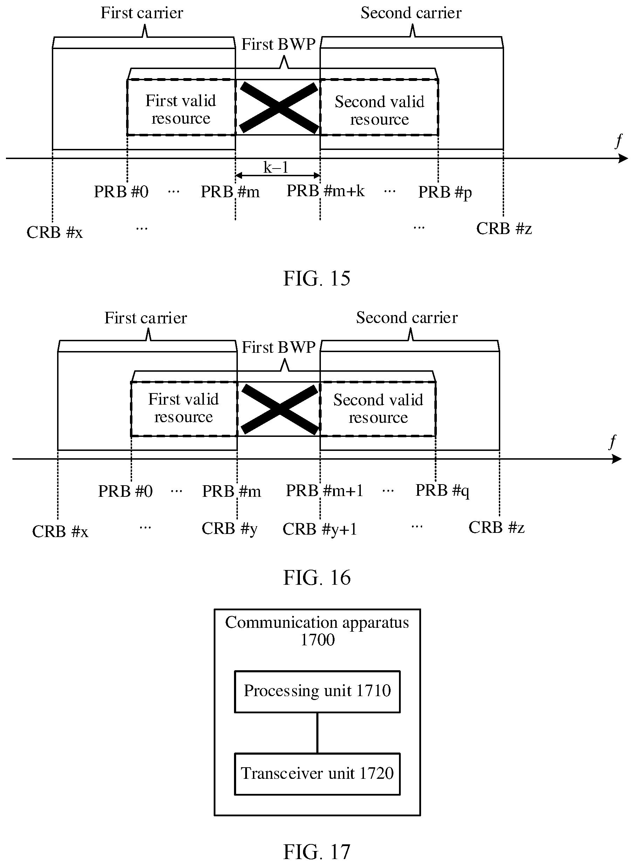

FIG. 15 shows an example of a first BWP. The indexes of the PRBs in the first BWP range from 0 to p, indexes of the first valid resource range from 0 to m, and indexes of the second valid resource range from m+k to p. It can be learned that an index of a 1^{st} PRB of the second valid resource (that is, m+k) and an index of a last PRB of the first valid resource (that is, m) are non-contiguous. In the first BWP, k-1 PRBs do not intersect the frequency resource of the first carrier, and do not intersect the frequency resource of the second carrier.

Method B: The PRBs in the valid resource in the first BWP are consecutively numbered.

Indexes of PRBs included in the first valid resource are consecutive, indexes of PRBs included in the second valid resource are consecutive, and the indexes of the PRBs of the first valid resource and the indexes of the PRBs of the second valid resource are consecutive.

FIG. 16 shows an example of a first valid resource and a second valid resource. Indexes of the first valid resource range from 0 to m, and indexes of the second valid resource range from m+1 to q. It can be learned that an index of a 1^{st} PRB of the second valid resource (that is, m+1) and an index of a last PRB of the first valid resource (that is, m) are consecutive.

For the implementation method 2, in an implementation method, a size of a resource block group (resource block group, RBG) is determined based on a quantity of PRBs included in the valid resource in the first BWP, instead of a quantity of RPBs included in the first BWP. In other words, a quantity of RPBs occupied by an invalid resource needs to be excluded. The invalid resource is a resource that is in a frequency domain resource of the first BWP and that does not overlap a frequency domain resource of the first carrier or a frequency domain resource of the second carrier. The size of the RBG is a quantity of PRBs included in the RBG. Correspondingly, a quantity of bits included in a frequency domain resource allocation (frequency domain resource allocation, FDRA) indication field in the DCI is determined based on the quantity of PRBs included in the valid resource in the first BWP and the size of the RBG.

For the implementation method 2, in an implementation method, for a PDSCH transmission or a PUSCH transmission, a first precoding codebook is used in the first valid resource and a second precoding codebook is used in the second valid resource. The first precoding codebook may be the same as or different from the second precoding codebook. This is not limited in this application.

For the implementation method 2, in an implementation method, in the first valid resource, a first resource is used for downlink measurement and/or a second resource is used for measurement reporting, and in the second valid resource, a third resource is used for downlink measurement and/or a fourth resource is used for measurement reporting. The first resource is different from the third resource, and the second resource may be the same as or different from the fourth resource. In other words, downlink measurement and measurement reporting are independently performed in different valid resources of the first BWP. The downlink measurement includes, for example, channel state information (channel state information, CSI) measurement, downlink path loss measurement, and the like. In this solution, downlink measurement and measurement reporting are independently performed in different valid resources, so that flexibility and accuracy of measurement and reporting can be improved.

For the implementation method 2, in an implementation method, in the first valid resource, a fifth resource is used for uplink measurement, and in the second valid resource, a sixth resource is used for uplink measurement. The fifth resource is different from the sixth resource. In other words, uplink measurement is independently performed in different valid resources of the first BWP. For example, when a PUSCH transmission spans the first valid resource and the second valid resource, the first valid resource and the second valid resource may keep a same quantity of transmission layers, but have different antenna ports (antenna port) and different precoding codebooks (precoder). In this solution, uplink measurement is independently performed in different valid resources, so that flexibility and accuracy of measurement can be improved.

For the foregoing implementation method 2, a related implementation method of the first BWP is described by using the first BWP as an example. For another BWP, if a frequency domain resource of the BWP overlaps both the frequency domain resource of the first carrier and the frequency domain resource of the second carrier, for an implementation method of the BWP, refer to the implementation method of the first BWP. Details are not described again.

In an implementation method, for implementation of the BWP identification method, the BWP activation method, and the method for reducing the switching delay between the plurality of BWPs in the foregoing implementation method 2, refer to the BWP identification method, the BWP activation method, and the method for reducing the switching delay between the plurality of BWPs in the foregoing implementation method 1, or another manner. This is not limited in this application.

It may be understood that, to implement functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

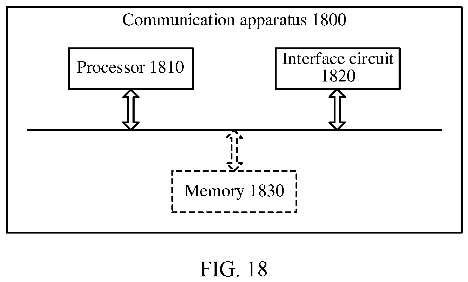

FIG. 17 and FIG. 18 are diagrams of structures of possible communication apparatuses according to embodiments of this application. These communication apparatuses may be configured to implement the functions of the terminal device or the network device in the foregoing method embodiments. Therefore, beneficial effects of the foregoing method embodiments can also be achieved. In embodiments of this application, the communication apparatus may be a terminal device, may be a network device, or may be a module (for example, a chip) used in the terminal device or the network device.

As shown in FIG. 17, the communication apparatus 1700 includes a processing unit 1710 and a transceiver unit 1720. The communication apparatus 1700 is configured to implement the functions of the terminal device or the network device in the foregoing method embodiments.

When the communication apparatus 1700 is configured to implement the functions of the network device in the foregoing method embodiments, the processing unit 1710 is configured to control the transceiver unit 1720 to send first configuration information to a terminal device, where the first configuration information is used to configure a first carrier and a second carrier for the terminal device; and send second configuration information to the terminal device, where the second configuration information is used to configure X BWPs for the terminal device, and X is an integer greater than 1, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

In a possible implementation method, a part of the N BWPs is located on the first carrier, and the other part is located on the second carrier.

In a possible implementation method, an identifier of each of the X BWPs includes a first part and a second part, first parts of identifiers of the X BWPs are the same, and second parts of the identifiers of the X BWPs are different from each other.

In a possible implementation method, the processing unit 1710 is further configured to control the transceiver unit 1720 to send DCI to the terminal device, where the DCI is used to activate the N BWPs.

In a possible implementation method, a BWP indicator field in the DCI includes a first field and a second field, the first field indicates first parts of identifiers of the N BWPs, and the second field indicates second parts of the identifiers of the N BWPs.

In a possible implementation method, the second field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the second field includes the second parts of the identifiers of the N BWPs.

In a possible implementation method, the DCI includes a first BWP indicator field and a second BWP indicator field, the first BWP indicator field indicates first parts of identifiers of the N BWPs, and the second BWP indicator field indicates second parts of the identifiers of the N BWPs.

In a possible implementation method, the second BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the second BWP indicator field includes the second parts of the identifiers of the N BWPs.

In a possible implementation method, the processing unit 1710 is further configured to control the transceiver unit 1720 to send first signaling and DCI to the terminal device, where the first signaling indicates first parts of identifiers of the N BWPs in the X BPWs, the DCI indicates second parts of the identifiers of the N BWPs, and the first signaling is RRC signaling, a SIB, a MIB, or a MAC CE.

In a possible implementation method, each of the X BWPs has a dedicated identifier.

In a possible implementation method, the processing unit 1710 is further configured to control the transceiver unit 1720 to send DCI to the terminal device, where the DCI is used to activate the N BWPs.

In a possible implementation method, the DCI includes N BWP indicator fields, and each of the N BWP indicator fields indicates an identifier of one of the N BWPs.

In a possible implementation method, the DCI includes a BWP indicator field, the BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the DCI includes a BWP indicator field, and the BWP indicator field includes identifiers of the N BWPs.

In a possible implementation method, a part or all of the following parameters of the X BWPs are the same: frequency resource parameters of the BWPs, channel parameters, or signal parameters.

In a possible implementation method, a channel includes one or more of the following: a PDSCH, a PDCCH, a PUSCH, a PRACH, or a PUCCH; and a signal includes one or more of the following: a DMRS of the PDSCH, a DMRS of the PDCCH, a DMRS of the PUSCH, a DMRS of the PUCCH, a PTRS of the PDSCH, a PTRS of the PUSCH, a CSI-RS, a TRS, an SRS, or an SSB.

In a possible implementation method, a switching delay between the X BWPs is less than a first threshold, where when a subcarrier spacing is 15 kilohertz, the first threshold is equal to duration of one slot or duration of three slots; when a subcarrier spacing is 30 kilohertz, the first threshold is equal to duration of two slots or duration of five slots; when a subcarrier spacing is 60 kilohertz, the first threshold is equal to duration of three slots or duration of nine slots; or when a subcarrier spacing is 120 kilohertz, the first threshold is equal to duration of six slots or duration of 18 slots.

When the communication apparatus 1700 is configured to implement the functions of the terminal device in the foregoing method embodiments, the processing unit 1710 is configured to control the transceiver unit 1720 to receive first configuration information from a network device, where the first configuration information is used to configure a first carrier and a second carrier for the terminal device; and receive second configuration information from the network device, where the second configuration information is used to configure X BWPs for the terminal device, and X is an integer greater than 1, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

In a possible implementation method, a part of the N BWPs is located on the first carrier, and the other part is located on the second carrier.

In a possible implementation method, an identifier of each of the X BWPs includes a first part and a second part, first parts of identifiers of the X BWPs are the same, and second parts of the identifiers of the X BWPs are different from each other.

In a possible implementation method, the processing unit 1710 is further configured to control the transceiver unit 1720 to receive DCI from the network device, where the DCI is used to activate the N BWPs.

In a possible implementation method, a BWP indicator field in the DCI includes a first field and a second field, the first field indicates first parts of identifiers of the N BWPs, and the second field indicates second parts of the identifiers of the N BWPs.

In a possible implementation method, the second field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the second field includes the second parts of the identifiers of the N BWPs.

In a possible implementation method, the DCI includes a first BWP indicator field and a second BWP indicator field, the first BWP indicator field indicates first parts of identifiers of the N BWPs, and the second BWP indicator field indicates second parts of the identifiers of the N BWPs.

In a possible implementation method, the second BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the second BWP indicator field includes the second parts of the identifiers of the N BWPs.

In a possible implementation method, the processing unit 1710 is further configured to control the transceiver unit 1720 to receive first signaling and DCI from the network device, where the first signaling indicates first parts of identifiers of the N BWPs in the X BPWs, the DCI indicates second parts of the identifiers of the N BWPs, and the first signaling is RRC signaling, a SIB, a MIB, or a MAC CE.

In a possible implementation method, each of the X BWPs has a dedicated identifier.

In a possible implementation method, the processing unit 1710 is further configured to control the transceiver unit 1720 to receive DCI from the network device, where the DCI is used to activate the N BWPs.

In a possible implementation method, the DCI includes N BWP indicator fields, and each of the N BWP indicator fields indicates an identifier of one of the N BWPs.

In a possible implementation method, the DCI includes a BWP indicator field, the BWP indicator field includes X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

In a possible implementation method, the DCI includes a BWP indicator field, and the BWP indicator field includes identifiers of the N BWPs.

In a possible implementation method, a part or all of the following parameters of the X BWPs are the same: frequency resource parameters of the BWPs, channel parameters, or signal parameters.

In a possible implementation method, a channel includes one or more of the following: a PDSCH, a PDCCH, a PUSCH, a PRACH, or a PUCCH; and a signal includes one or more of the following: a DMRS of the PDSCH, a DMRS of the PDCCH, a DMRS of the PUSCH, a DMRS of the PUCCH, a PTRS of the PDSCH, a PTRS of the PUSCH, a CSI-RS, a TRS, an SRS, or an SSB.

In a possible implementation method, a switching delay between the X BWPs is less than a first threshold, where when a subcarrier spacing is 15 kilohertz, the first threshold is equal to duration of one slot or duration of three slots; when a subcarrier spacing is 30 kilohertz, the first threshold is equal to duration of two slots or duration of five slots; when a subcarrier spacing is 60 kilohertz, the first threshold is equal to duration of three slots or duration of nine slots; or when a subcarrier spacing is 120 kilohertz, the first threshold is equal to duration of six slots or duration of 18 slots.

When the communication apparatus 1700 is configured to implement the functions of the network device in the foregoing method embodiments, the processing unit 1710 is configured to control the transceiver unit 1720 to send first configuration information to a terminal device, where the first configuration information is used to configure a first carrier and a second carrier for the terminal device; and send second configuration information to the terminal device, where the second configuration information is used to configure X BWPs for the terminal device, and X is a positive integer, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs include a first BWP, a frequency resource of the first BWP is contiguous and overlaps both the first carrier and the second carrier, N BWPs in the X BWPs are simultaneously activated, and N is an integer greater than 1.

In a possible implementation method, a frequency domain start position of the first BWP is located on one of the first carrier and the second carrier that has a lower frequency position.

In a possible implementation method, the second configuration information includes indication information, and the indication information indicates a carrier on which a frequency domain start position of the first BWP is located.

In a possible implementation method, the second configuration information includes an intra-carrier offset of the first BWP and a bandwidth size of the first BWP.

In a possible implementation method, the second configuration information includes an RIV and a first parameter value, the RIV and the first parameter are used to determine an intra-carrier offset of the first BWP and a bandwidth size of the first BWP, and the first parameter is not less than a size of a frequency resource range occupied by the first carrier and the second carrier.

In a possible implementation method, only a valid resource in the first BWP is available for data transmission, the valid resource in the first BWP is an overlapping part between the frequency resource of the first BWP and a frequency resource of the first carrier and/or a frequency resource of the second carrier, and the valid resource in the first BWP includes a first valid resource on the first carrier and/or a second valid resource on the second carrier.

In a possible implementation method, PRBs in the first BWP are consecutively numbered; or PRBs in the valid resource in the first BWP are consecutively numbered.

In a possible implementation method, a size of an RBG is determined based on a quantity of PRBs included in the valid resource in the first BWP

In a possible implementation method, for a PDSCH transmission or a PUSCH transmission, a first precoding codebook is used in the first valid resource and a second precoding codebook is used in the second valid resource.

In a possible implementation method, in the first valid resource, a first resource is used for downlink measurement and/or a second resource is used for measurement reporting, and in the second valid resource, a third resource is used for downlink measurement and/or a fourth resource is used for measurement reporting, where the first resource is different from the third resource.

In a possible implementation method, in the first valid resource, a fifth resource is used for uplink measurement, and in the second valid resource, a sixth resource is used for uplink measurement, where the fifth resource is different from the sixth resource.

When the communication apparatus 1700 is configured to implement the functions of the terminal device in the foregoing method embodiments, the processing unit 1710 is configured to control the transceiver unit 1720 to receive first configuration information from a network device, where the first configuration information is used to configure a first carrier and a second carrier for the terminal device; and receive second configuration information from the network device, where the second configuration information is used to configure X BWPs for the terminal device, and X is a positive integer, where the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs include a first BWP, a frequency resource of the first BWP is contiguous and overlaps both the first carrier and the second carrier, N BWPs in the X BWPs are simultaneously activated, and N is an integer greater than 1.

In a possible implementation method, a frequency domain start position of the first BWP is located on one of the first carrier and the second carrier that has a lower frequency position.

In a possible implementation method, the second configuration information includes indication information, and the indication information indicates a carrier on which a frequency domain start position of the first BWP is located.

In a possible implementation method, the second configuration information includes an intra-carrier offset of the first BWP and a bandwidth size of the first BWP.

In a possible implementation method, the second configuration information includes an RIV and a first parameter value, the RIV and the first parameter are used to determine an intra-carrier offset of the first BWP and a bandwidth size of the first BWP, and the first parameter is not less than a size of a frequency resource range occupied by the first carrier and the second carrier.

In a possible implementation method, only a valid resource in the first BWP is available for data transmission, the valid resource in the first BWP is an overlapping part between the frequency resource of the first BWP and a frequency resource of the first carrier and/or a frequency resource of the second carrier, and the valid resource in the first BWP includes a first valid resource on the first carrier and/or a second valid resource on the second carrier.

In a possible implementation method, PRBs in the first BWP are consecutively numbered; or PRBs in the valid resource in the first BWP are consecutively numbered.

In a possible implementation method, a size of an RBG is determined based on a quantity of PRBs included in the valid resource in the first BWP

In a possible implementation method, for a PDSCH transmission or a PUSCH transmission, a first precoding codebook is used in the first valid resource and a second precoding codebook is used in the second valid resource.

In a possible implementation method, in the first valid resource, a first resource is used for downlink measurement and/or a second resource is used for measurement reporting, and in the second valid resource, a third resource is used for downlink measurement and/or a fourth resource is used for measurement reporting, where the first resource is different from the third resource.

In a possible implementation method, in the first valid resource, a fifth resource is used for uplink measurement, and in the second valid resource, a sixth resource is used for uplink measurement, where the fifth resource is different from the sixth resource.

For more detailed descriptions about the processing unit 1710 and the transceiver unit 1720, directly refer to the related descriptions in the foregoing method embodiments. Details are not described herein again.

The communication apparatus 1800 shown in FIG. 18 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, store input data required by the processor 1810 to run the instructions, or store data generated after the processor 1810 runs the instructions.

When the communication apparatus 1800 is configured to implement the foregoing method embodiments, the processor 1810 is configured to implement the functions of the processing unit 1710, and the interface circuit 1820 is configured to implement the functions of the transceiver unit 1720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may be a component of the processor. The processor and the storage medium may be disposed in the ASIC. In addition, the ASIC may be located in a terminal device or a network device. Certainly, the processor and the storage medium may exist in an access network device or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. The computer program (computer program) is a set of instructions that indicate each step of an action of an electronic computer or another device having a message processing capability, and is usually written in a program design language and run on a target architecture. When the computer programs or the instructions are loaded and executed on a computer, all or some of the procedures or functions in embodiments of this application are executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending first configuration information to a terminal device, wherein the first configuration information is used to configure a first carrier and a second carrier for the terminal device; and
sending second configuration information to the terminal device, wherein the second configuration information is used to configure X bandwidth parts BWPs for the terminal device, and X is an integer greater than 1, wherein
the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

2. The method according to claim 1, wherein an identifier of each of the X BWPs comprises a first part and a second part, first parts of identifiers of the X BWPs are the same, and second parts of the identifiers of the X BWPs are different from each other.

3. The method according to claim 2, wherein the method further comprises:
sending downlink control information DCI to the terminal device, wherein the DCI is used to activate the N BWPs.

4. The method according to claim 3, wherein a BWP indicator field in the DCI comprises a first field and a second field, the first field indicates first parts of identifiers of the N BWPs, and the second field indicates second parts of the identifiers of the N BWPs.

5. The method according to claim 4, wherein the second field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

6. The method according to claim 4, wherein the second field comprises the second parts of the identifiers of the N BWPs.

7. The method according to claim 3, wherein the DCI comprises a first BWP indicator field and a second BWP indicator field, the first BWP indicator field indicates first parts of identifiers of the N BWPs, and the second BWP indicator field indicates second parts of the identifiers of the N BWPs.

8. The method according to claim 7, wherein the second BWP indicator field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

9. The method according to claim 7, wherein the second BWP indicator field comprises the second parts of the identifiers of the N BWPs.

10. The method according to claim 2, wherein the method further comprises:
sending first signaling and DCI to the terminal device, wherein the first signaling indicates first parts of identifiers of the N BWPs in the X BPWs, the DCI indicates second parts of the identifiers of the N BWPs, and the first signaling is radio resource control RRC signaling, a system information block SIB, a master information block MIB, or a medium access control control element MAC CE.

11. The method according to claim 1, wherein each of the X BWPs has a dedicated identifier.

12. The method according to claim 11, wherein the method further comprises:
sending DCI to the terminal device, wherein the DCI is used to activate the N BWPs.

13. The method according to claim 12, wherein the DCI comprises N BWP indicator fields, and each of the N BWP indicator fields indicates an identifier of one of the N BWPs.

14. The method according to claim 12, wherein the DCI comprises a BWP indicator field, the BWP indicator field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

15. The method according to claim 12, wherein the DCI comprises a BWP indicator field, and the BWP indicator field comprises identifiers of the N BWPs.

16. A communication method, wherein the method comprises:
receiving first configuration information from a network device, wherein the first configuration information is used to configure a first carrier and a second carrier for a terminal device; and
receiving second configuration information from the network device, wherein the second configuration information is used to configure X bandwidth parts BWPs for the terminal device, and X is an integer greater than 1, wherein
the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, M BWPs in the X BWPs are located on the first carrier, the remaining X-M BWPs in the X BWPs are located on the second carrier, N BWPs in the X BWPs are simultaneously activated, M is a positive integer, X-M is a positive integer, and N is an integer greater than 1.

17. The method according to claim 16, wherein an identifier of each of the X BWPs comprises a first part and a second part, first parts of identifiers of the X BWPs are the same, and second parts of the identifiers of the X BWPs are different from each other.

18. The method according to claim 17, wherein the method further comprises:
receiving downlink control information DCI from the network device, wherein the DCI is used to activate the N BWPs.

19. The method according to claim 18, wherein a BWP indicator field in the DCI comprises a first field and a second field, the first field indicates first parts of identifiers of the N BWPs, and the second field indicates second parts of the identifiers of the N BWPs.

20. The method according to claim 19, wherein the second field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

21. The method according to claim 19, wherein the second field comprises the second parts of the identifiers of the N BWPs.

22. The method according to claim 18, wherein the DCI comprises a first BWP indicator field and a second BWP indicator field, the first BWP indicator field indicates first parts of identifiers of the N BWPs, and the second BWP indicator field indicates second parts of the identifiers of the N BWPs.

23. The method according to claim 22, wherein the second BWP indicator field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

24. The method according to claim 22, wherein the second BWP indicator field comprises the second parts of the identifiers of the N BWPs.

25. The method according to claim 17, wherein the method further comprises:
receiving first signaling and DCI from the network device, wherein the first signaling indicates first parts of identifiers of the N BWPs in the X BPWs, the DCI indicates second parts of the identifiers of the N BWPs, and the first signaling is radio resource control RRC signaling, a system information block SIB, a master information block MIB, or a medium access control control element MAC CE.

26. The method according to claim 16, wherein each of the X BWPs has a dedicated identifier.

27. The method according to claim 26, wherein the method further comprises:
receiving DCI from the network device, wherein the DCI is used to activate the N BWPs.

28. The method according to claim 27, wherein the DCI comprises N BWP indicator fields, and each of the N BWP indicator fields indicates an identifier of one of the N BWPs.

29. The method according to claim 27, wherein the DCI comprises a BWP indicator field, the BWP indicator field comprises X bits, the X bits are in one-to-one correspondence with the X BWPs, values of N bits in the X bits are a first value, the first value indicates to activate a corresponding BWP, values of the remaining X-N bits in the X bits are a second value, and the second value indicates not to activate a corresponding BWP.

30. The method according to claim 27, wherein the DCI comprises a BWP indicator field, and the BWP indicator field comprises identifiers of the N BWPs.

31. The method according to any one of claims 1 to 30, wherein a part or all of the following parameters of the X BWPs are the same:
frequency resource parameters of the BWPs, channel parameters, or signal parameters.

32. The method according to any one of claims 1 to 31, wherein a switching delay between the X BWPs is less than a first threshold, wherein
when a subcarrier spacing is 15 kilohertz, the first threshold is equal to duration of one slot or duration of three slots;
when a subcarrier spacing is 30 kilohertz, the first threshold is equal to duration of two slots or duration of five slots;
when a subcarrier spacing is 60 kilohertz, the first threshold is equal to duration of three slots or duration of nine slots; or
when a subcarrier spacing is 120 kilohertz, the first threshold is equal to duration of six slots or duration of 18 slots.

33. A communication method, wherein the method comprises:
sending first configuration information to a terminal device, wherein the first configuration information is used to configure a first carrier and a second carrier for the terminal device; and
sending second configuration information to the terminal device, wherein the second configuration information is used to configure X bandwidth parts BWPs for the terminal device, and X is a positive integer, wherein
the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs comprise a first BWP, a frequency resource of the first BWP is contiguous and overlaps both the first carrier and the second carrier, N BWPs in the X BWPs are simultaneously activated, and N is an integer greater than 1.

34. A communication method, wherein the method comprises:
receiving first configuration information from a network device, wherein the first configuration information is used to configure a first carrier and a second carrier for a terminal device; and
receiving second configuration information from the network device, wherein the second configuration information is used to configure X bandwidth parts BWPs for the terminal device, and X is a positive integer, wherein
the first carrier, the second carrier, and the X BWPs have a same link direction, the first carrier is located on a first frequency sub-band of a first frequency band, the second carrier is located on a second frequency sub-band of the first frequency band, the first frequency sub-band and the second frequency sub-band are non-contiguous, the X BWPs comprise a first BWP, a frequency resource of the first BWP is contiguous and overlaps both the first carrier and the second carrier, N BWPs in the X BWPs are simultaneously activated, and N is an integer greater than 1.

35. The method according to claim 33 or 34, wherein a frequency domain start position of the first BWP is located on one of the first carrier and the second carrier that has a lower frequency position.

36. The method according to claim 33 or 34, wherein the second configuration information comprises indication information, and the indication information indicates a carrier on which a frequency domain start position of the first BWP is located.

37. The method according to any one of claims 33 to 36, wherein the second configuration information comprises an intra-carrier offset of the first BWP and a bandwidth size of the first BWP.

38. The method according to any one of claims 33 to 36, wherein the second configuration information comprises a resource indicator value RIV and a first parameter value, the RIV and the first parameter are used to determine an intra-carrier offset of the first BWP and a bandwidth size of the first BWP, and the first parameter is not less than a size of a frequency resource range occupied by the first carrier and the second carrier.

39. The method according to any one of claims 33 to 38, wherein only a valid resource in the first BWP is available for data transmission, the valid resource in the first BWP is an overlapping part between the frequency resource of the first BWP and a frequency resource of the first carrier and/or a frequency resource of the second carrier, and the valid resource in the first BWP comprises a first valid resource on the first carrier and/or a second valid resource on the second carrier.

40. The method according to claim 39, wherein physical resource blocks PRBs in the first BWP are consecutively numbered; or
PRBs in the valid resource in the first BWP are consecutively numbered.

41. The method according to claim 39 or 40, wherein a size of a resource block group RBG is determined based on a quantity of PRBs comprised in the valid resource in the first BWP.

42. The method according to any one of claims 39 to 41, wherein for a PDSCH transmission or a PUSCH transmission, a first precoding codebook is used in the first valid resource and a second precoding codebook is used in the second valid resource.

43. The method according to any one of claims 39 to 42, wherein in the first valid resource, a first resource is used for downlink measurement and/or a second resource is used for measurement reporting, and in the second valid resource, a third resource is used for downlink measurement and/or a fourth resource is used for measurement reporting, wherein the first resource is different from the third resource.

44. The method according to any one of claims 39 to 43, wherein in the first valid resource, a fifth resource is used for uplink measurement, and in the second valid resource, a sixth resource is used for uplink measurement, wherein the fifth resource is different from the sixth resource.

45. A communication apparatus, comprising a module configured to perform the method according to any one of claims 1 to 15 and 31 and 32, or the method according to any one of claims 16 to 32, or the method according to any one of claims 33 and 35 to 44, or the method according to any one of claims 34 to 44.

46. A communication apparatus, comprising a processor and an interface circuit, wherein the processor is configured to: communicate with another apparatus through the interface circuit, and perform the method according to any one of claims 1 to 15 and 31 and 32, or perform the method according to any one of claims 16 to 32, or perform the method according to any one of claims 33 and 35 to 44, or perform the method according to any one of claims 34 to 44.

47. A computer program product, wherein the computer program product comprises instructions, and when the instructions are run on a processor, the processor is caused to perform the method according to any one of claims 1 to 15 and 31 and 32, or perform the method according to any one of claims 16 to 32, or perform the method according to any one of claims 33 and 35 to 44, or perform the method according to any one of claims 34 to 44.

48. A computer-readable storage medium, wherein the storage medium stores a computer program or instructions, and when the computer program or instruction s are executed by a communication apparatus, the method according to any one of claims 1 to 15 and 31 and 32 is implemented, or the method according to any one of claims 16 to 32 is implemented, or the method according to any one of claims 33 and 35 to 44 is implemented, or the method according to any one of claims 34 to 44 is implemented.
